# EUROPÄISCHE PATENTSCHRIFT

(11) **EP 1 262 593 B1**
(45) Veröffentlichungstag und Bekanntmachung des Hinweises auf die Patenterteilung: **03.05.2006**
(21) Anmeldenummer: 02008993.4
(22) Anmeldetag: 23.04.2002
(51) Int. Cl.: D21B 1/32, D21F 1/70, B03D 1/14

(54) **Verfahren zur Entfernung von Störstoffen aus einer wässrigen Papierfasersuspension.**
Process for removing impurities from an aqueous fibrous material suspension
Procédé pour éliminer les impuretés d' une suspension aqueuse de matières fibreuses

(30) Priorität: 29.05.2001 DE 10125977
(43) Veröffentlichungstag der Anmeldung: 04.12.2002
(73) Patentinhaber: Voith Paper Patent GmbH, 89522 Heidenheim (DE)
(72) Erfinder: Britz, Herbert, 88250 Weingarten (DE); Hess, Harald, 88287 Grünkraut (DE); Kemper, Martin, 88250 Weingarten (DE); Reinholdt, Boris, 88289 Waldburg (DE); Stetter, Andrea, 88074 Meckenbeuren (DE)

(56) Entgegenhaltungen:
- EP-A- 0 391 042
- EP-A- 0 558 908
- FR-A- 1 048 066
- US-A- 5 804 061
- P. SCHWEISS: "die voith-mehrfach-injectorzelle" DAS PAPIER, Bd. 42, Nr. 7, August 1988 (1988-08), Seiten 337-345, XP000003086 darmstadt,w.germany

## Beschreibung

Die Erfindung betrifft ein Verfahren zur Entfernung von Störstoffen aus einer wässrigen Papierfasersuspension gemäß dem Oberbegriff des Anspruchs 1 (siehe zum Beispiel das Dokument EP-A-0 558 908).

Durch Flotation wird ein die auszuscheidenden Stoffe enthaltender Schaum oder Schwimmschlamm gebildet. Ein typischer Anwendungsfall für solche Verfahren ist die Aufbereitung von einer aus bedrucktem Altpapier gewonnenen Suspension, in der die Druckfarbenpartikel bereits von Fasern abgelöst sind, so daß sie sich ausflotieren lassen. Der hier beschriebene Flotationsvorgang nutzt die Unterschiede zwischen Papierfaserstoff und unerwünschten Störstoffteilchen in der Art, daß der Faserstoff aufgrund seines eher hydrophilen Charakters in der Fasersuspension verbleibt, während die angesprochenen Störstoffteilchen hydrophob sind und deshalb zusammen mit den Luftblasen in den Schaum gelangen. Weil dabei nicht alle Feststoffe ausflotiert, sondern Fasern von Verunreinigungen getrennt werden, spricht man von selektiver Flotation. Der ebenfalls benutzte Begriff "Flotationsdeinking" wird in der Regel nicht nur für die Entfernung von Druckfarbenpartikeln (ink = Druckfarbe), sondern auch allgemeiner für die selektive Flotation von Verunreinigungen aus Faserstoffsuspensionen verwendet. Solche Stoffe sind insbesondere Kleber, feine Kunststoffpartikel und eventuell auch Harze.

Da der Flotationsschaum, der bei einer einzigen Flotationsstufe gebildet wird, in den meisten Fällen noch einen beträchlichen Anteil von Papierfasern enthält, wird das hier beschriebene Verfahren mit mindestens zwei Flotationsstufen durchgeführt, wobei der Überlauf, also der Flotationsschaum, der ersten Stufe als Einlauf in die zweite Stufe geführt wird. Üblicherweise spricht man dann von einer ersten und zweiten Flotationsstufe oder auch von Primär- und Sekundärflotation. Der Durchlauf der zweiten Flotationsstufe kann dem Zulauf der ersten Flotationsstufe wieder zugegeben werden. Anlagen, die nach einem solchen Verfahren arbeiten, haben sich an sich bewährt, da sie bei geringen Stoffverlusten zu einer guten Qualität des so gebildeten Gutstoffes führen. Da sich jedoch die Rohstoffe, insbesondere wenn sie aus Altpapier bestehen, in ihrer Zusammensetzung und Qualität ständig ändern, ist es nicht immer einfach, solche Anlagen optimal zu fahren. Bei den großen Zellenvolumina sind auch die Regel-Totzeiten oft sehr hoch.

Es gibt auch Fälle, bei denen der Durchlauf der zweiten Stufe dem Durchlauf der ersten Stufe zugemischt wird.

Der Erfindung liegt die Aufgabe zu Grunde, das Verfahren so zu gestalten, dass eine gute und schnell wirkende Regelung z.B. auf konstante Qualität des erzeugten Gutstoffs ermöglicht wird.

Diese Aufgabe wird durch die im Kennzeichen des Anspruchs 1 genannten Merkmale bereits vollständig gelöst.

Dadurch, dass der Durchlauf der zweiten Flotationsstufe aufgeteilt wird und das Verhältnis dieser Aufteilung einstellbar ist, ergibt sich die Möglichkeit, simultan auf Schwankungen im System zu reagieren. Wichtige Qualitätsmerkmale des Flotationsgutstoffes sind z.B. dessen Weißgrad, Schmutzpunktgehalt und Aschegehalt. Wegen der bereits erwähnten Schwankungen im Rohstoff können auch bei sonst stabiler Funktion der Flotationsanlage im Gutstoff Schwankungen auftreten, die nicht mehr akzeptiert werden. Durch eine Änderung der Aufteilung der genannten Stoffströme, die sich sofort auf die Zusammensetzung des in der Flotationsanlage gewonnenen Gutstoffes auswirkt, werden die Korrekturen sehr schnell wirksam. Auf die verschiedenen Möglichkeiten solcher Regelvorgänge wird noch detaillierter eingegangen werden.

Die Erfindung und ihre Vorteile werden erläutert an Hand von Zeichnungen. Dabei zeigen:
- Fig. 1: ein Verfahrensschema;
- Fig. 2: eine Variante des Verfahrens, dargestellt an einem Teilschema;
- Fig. 3: eine Flotationszelle zur Durchführung des Verfahrens
- Fig. 4: eine Regelungsvariante.

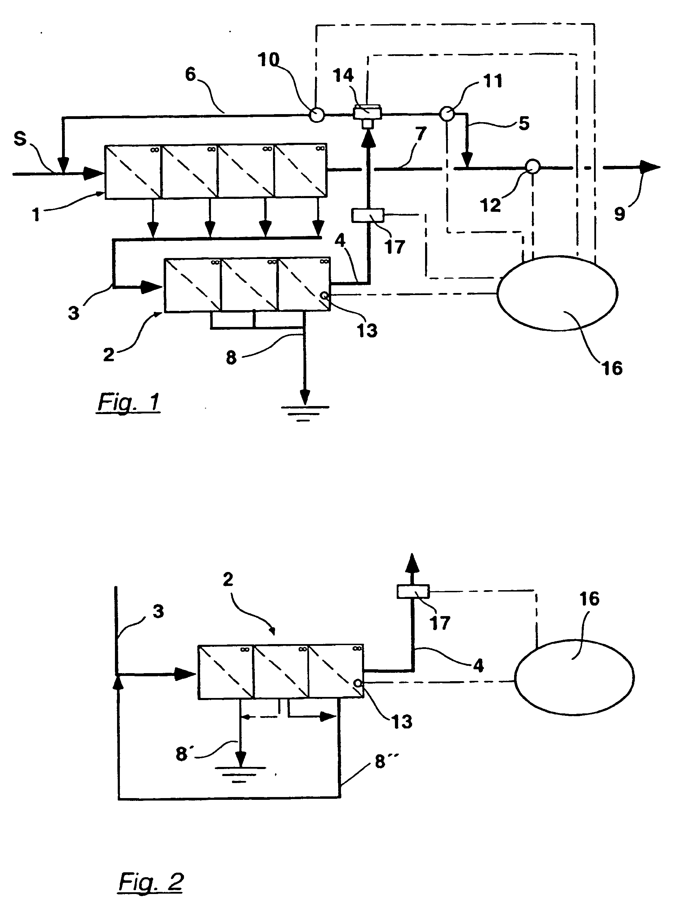

Gemäß Fig. 1 wird die Papierfaserstoffsuspension S zunächst einer ersten Flotationsstufe 1 zugeführt. Der apparative Aufbau einer solchen Flotationsstufe ist an sich bekannt. Sie kann eine oder mehrere Flotationszellen enthalten, welche von der Suspension nacheinander oder parallel durchströmt werden. Bei dem hier gezeigten Beispiel sind vier Flotationszellen der ersten Flotationsstufe 1 gezeichnet. Der Flotationsschaum 3'wird gesammelt, eventuell entlüftet (nicht dargestellt) und der zweiten Flotationsstufe 2 zugeführt. Auch aus dieser wird ein Flotationsschaum 8 abgezogen, wobei es typisch für solche Kaskadenschaltungen ist, dass der Flotationsschaum der späteren Stufen wesentlich mehr Störstoffe und wesentlich weniger Fasern enthält als der Flotationsschaum der voranstehenden Stufen. Der in der zweiten Flotationsstufe 2 gebildete Durchlauf 4 wird erfindungsgemäß in einen Vorlaufanteil 5 und einen Rücklaufanteil 6 aufgeteilt; wozu eine Verteileinrichtung 14 angedeutet ist. Dabei geht der Vorlaufanteil 5 in den Durchlauf 7 der ersten Flotationsstufe 1 und der Rücklaufanteil 6 in deren Zulauf. Durch Mischen von Durchlauf 7 und Vorlaufanteil 5 wird der Gutstoff 9 der Anlage gebildet.

Mit Vorteil wird die Verteileinrichtung 14 durch einen Regler 16 gesteuert. Dieser Regler 16 verarbeitet z.B. ein Qualitätssignal aus dem Qualitätssensor 12 und die Durchflussmesswerte der Durchflusssensoren 10 und 11. Da in vielen Fällen der Durchlauf 4 aus der zweiten Flotationsstufe 2 nicht die Qualität des Durchlaufes 7 aus der ersten Flotationsstufe 1 erreicht, kann er z.B. bei sinkender Qualität des Gutstoffes 9 vermehrt dem Rücklaufanteil 6 zugeführt und erneut flotiert werden. Im umgekehrten Fall, also wenn die Qualität des Gutstoffes 9 den geforderten Wert überschreitet, kann ein größerer Teil des Durchlaufes 4 der zweiten Flotationsstufe als Vorlaufanteil 5 dienen. Entscheidend ist, dass der Gutstoff 9, der die Anlage verlässt, die geforderten Anforderungen erfüllt und dass dabei ein wirtschaftliches Optimum erreicht wird.

In vielen Fällen wird mittels Niveautransmitter 13 und Stellventil 17 in der Durchlaufleitung die Höhe des Suspensionsniveaus in der Flotationszelle auf einem vorgegebenen Wert gehalten. Das regelt die Schaummenge am Überlaufwehr. Auf die zweite Flotationsstufe 2 angewandt, lässt sich durch Änderung des Niveaus die Qualität des Gutstoffes 9 beeinflussen, weil dadurch, bezogen auf den Durchsatz dieser Stufe, eine größere bzw. kleinere Schaummenge und damit auch Störstoffmenge entfernt wird. Allerdings beeinflusst das auch wiederum die Konzentrationen in den Flotationsstufen, so dass eine beträchtliche Zeit vergeht, bis sich ein neuer Gleichgewichtszustand eingestellt hat.

In der Kombination dieser beiden Regelvorgänge liegt ein großer Vorteil des erfindungsgemäßen Verfahrens. Qualitätsabweichungen können zunächst kurzfristig ausgeglichen werden, was für die Produktion des Papiers aus dem Papierfaserstoff vorrangig ist. In einem überlagernden langsameren Regelvorgang werden Verluste' minimiert, ohne dass die Qualität leidet.

Wie die Fig. 2 zeigt, kann der Flotationsschaum, der an der zweiten Flotationsstufe 2 anfällt, teilweise in den Zulauf zur selben Flotationsstufe 2 zurückgeführt werden. Wenn die zweite Flotationsstufe 2 aus mehreren hintereinander geschalteten Flotationszellen besteht, was durchaus üblich ist, bietet sich für diese Schaumrückführung der Anteil 8" des Flotationsschaumes an, der an der letzten Flotationszelle bzw. an den letzten Flotationszellen dieser Stufe anfällt. Dahinter steht die Überlegung, dass ein solcher Schaum immer noch "sauberer" ist als der Flotationsschaum 8', der an den ersten Zellen dieser Flotationsstufe gebildet wird. Der letztgenannte Flotationsschaum 8', der am stärksten mit Störstoffen angereichert ist, wird dann als Rejekt verworfen. Auch diese Maßnahme dient dazu, die Ökonomie der Flotationsanlage zu erhöhen, indem der Faserverlust minimiert wird.

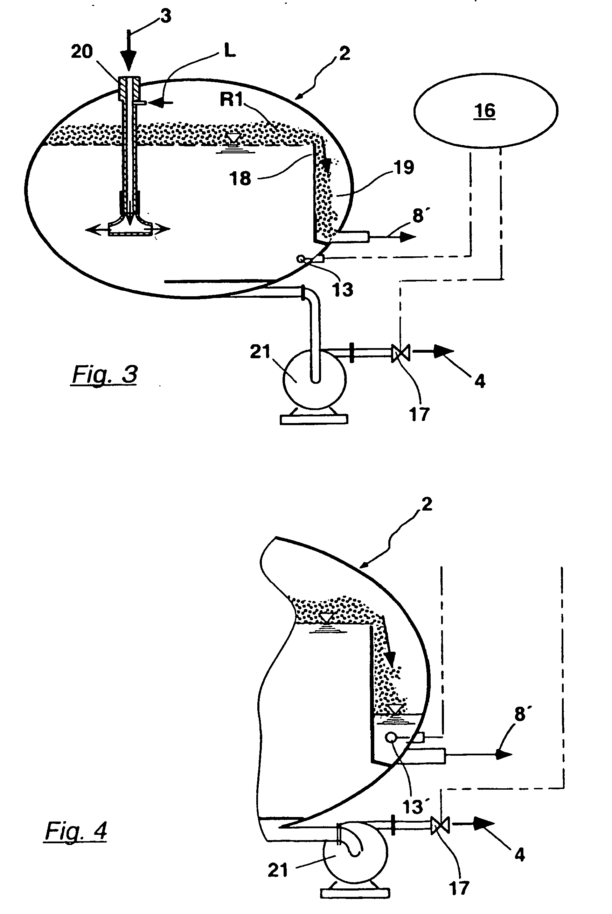

Die in Fig. 3 als Schnitt einer Seitenansicht schematisch dargestellte Flotationszelle, z.B. zur zweiten Flotationsstufe 2 gehörig, zeigt die Abfuhr des Schaumes, welcher über ein Wehr 18 in die Schaumrinne 19 dieser Flotationszelle abfließt. Oft sind mehrere solcher Zellen zu einer Flotationsstufe zusammengestellt und so miteinander verbunden, dass sich in ihnen ein gleiches Flüssigkeitsniveau einstellt. Der Niveautransmitter 13 gibt die Niveauhöhe an den Regler 16, der das Stellventil 17 für den Durchlauf 4 ansteuert. Zufuhr und Belüftung des zugeführten Stoffstromes, das ist bei der zweiten Flotationsstufe der Flotationsschaum 3 der ersten Flotationsstufe, erfolgt durch ein Belüftungsrohr 20. Dieses saugt die Luft L aus dem Inneren der Flotationszelle ab. Der Durchlauf einer Zelle wird über eine oder mehrere Pumpen 21 abgepumpt.

Fig. 4 zeigt eine Regelungsvariante: Statt des Zellenniveaus wird das Niveau in der Schaumrinne 19 gemessen und geregelt. Das ergibt kürzere Regelzeiten, setzt aber die sichere Messbarkeit des Schaumniveaus voraus.

## Patentansprüche

1. Verfahren zur Entfernung von Störstoffen aus einer wässrigen Papierfaserstoffsuspension (S) mit Hilfe mindestens zweier Flotationsstufen (1, 2), welche so geschaltet sind, dass der Flotationsschaum (3) der ersten Flotationsstufe (1) in den Zulauf zur zweiten Flotationsstufe (2) geführt wird,
**dadurch gekennzeichnet,**
**dass** der Durchlauf (4) der zweiten Flotationsstufe (2) in einen Vorlaufanteil (5) und einen Rücklaufanteil (6) aufgeteilt wird, wobei der Vorlaufanteil (5) in den Durchlauf (7) der ersten Flotationsstufe (1) und der Rücklaufanteil (6) in deren Zulauf geführt werden, und dass das Verhältnis dieser Aufteilung so eingestellt wird, dass die geforderten Qualitätswerte für den Gutstoff (9) der Gesamtanlage erreicht werden.

2. Verfahren nach Anspruch 1,
**dadurch gekennzeichnet,**
**dass** die Menge des Vorlaufanteils (5) gesenkt wird, wenn der Weißgrad des Gutstoffes (9) erhöht werden soll.

3. Verfahren nach Anspruch 1 oder 2,
**dadurch gekennzeichnet,**
**dass** die Menge des Vortaufanteils (5) gesenkt wird; wenn der Aschegehalt des Gutstoffes (9) gesenkt werden soll.

4. Verfahren nach Anspruch 1, 2 oder 3,
**dadurch gekennzeichnet,**
**dass** die Menge des aus der zweiten Flotationsstufe (2) abgezogenen Flotationsschaumes (8, 8', 8") reduziert wird, wenn der Faserverlust der Flotationsanlage reduziert werden soll.

5. Verfahren nach Anspruch 1, 2, 3 oder 4,
**dadurch gekennzeichnet,**
**dass** ein Anteil (8'') des aus der zweiten Flotationsstufe (2) abgezogenen Flotationsschaumes in den Zulauf derselben Flotationsstufe (2) zurückgeführt wird.

6. Verfahren nach Anspruch 5,
**dadurch gekennzeichnet,**
**dass** der Anteil (8") nur aus einem Teil der zur zweiten Flotationsstufe (2) gehörenden Flotationszellen entnommen wird.

7. Verfahren nach Anspruch 6,
**dadurch gekennzeichnet,**
**dass** als Teil der Flotationszellen der stromabwärtige Teil ausgewählt wird.

8. Verfahren nach Anspruch 5, 6 oder 7,
**dadurch gekennzeichnet,**
**dass** die Menge des Anteils (8'') erhöht wird, wenn der Faser- oder Ascheverlust der Flotationsanlage gesenkt werden soll.

9. Verfahren nach einem der voranstehenden Ansprüche,
**dadurch gekenntzeichnet,**
dass das Niveau in den eine Flotationsstufe (1, 2) bildenden Flotationszellen zur Regelung der Menge des abgeführten Flotationsschaumes (3, 8) eingestellt wird.

10. Verfahren nach einem der Ansprüche 1 bis 8,
**dadurch gekennzeichnet,**
**dass** das Schaumniveau in der Schaumrinne (19) der eine Flotationsstufe (1, 2) bildenden Flotationszellen zur Regelung der Menge des abgeführten Flotationsschaumes (3, 8) eingestellt wird.

11. Verfahren nach Anspruch 9 oder 10,
**dadurch gekennzeichnet,**
**dass** die Niveaueinstellung durch Ansteuerung eines den Durchlauf (4, 7) beeinflussenden Stellventils (17) erfolgt

12. Verfahren nach einem der voranstehenden Ansprüche,
**dadurch gekennzeichnet,**
**dass** für die Steuervorgänge mindestens ein Regler (16) verwendet wird.

13. Verfahren nach einem der voranstehenden Ansprüche,
**dadurch gekennzeichnet,**
**dass** die zweite Flotationsstufe (2) die letzte Flotationsstufe zur Flotation des bei einer dieser vorgeschalteten Flotationsstufe gebildeten Flotationsschaumes ist.

14. Verfahren nach einem der voranstehenden Ansprüche,
**dadurch gekennzeichnet,**
**dass** die erste Flötationsstufe (1) die Primärstufe der Flotationsanlage ist.

15. Verfahren nach einem der Ansprüche 1 bis 9,
**dadurch gekennzeichnet,**
**dass** die erste Flotationsstufe (1) bereits Flotationsschaum einer vorgeschalteten Flotationsstufe verarbeitet.

## Claims

1. A method for removing anionic trash from an aqueous paper stock suspension (S) using at least two flotation stages (1, 2) which are connected such that the flotation froth (3) of the first flotation stage (1) is guided into the feed to the second flotation stage (2),
**characterised in that**
the through feed (4) of the second flotation stage (2) is divided into a forward feed fraction (5) and a return feed fraction (6), the forward feed fraction (5) being guided into the through feed (7) of the first flotation stage (1) and the return feed fraction (6) into the feed thereof, and that the ratio of this division is set such that the required quality values for the accepted stock (9) of the entire plant are achieved.

2. A method according to Claim 1,
**characterised in that**
the amount of the forward feed fraction (5) is reduced if the brightness of the accepted stock (9) is to be increased.

3. A method according to Claim 1 or 2,
**characterised in that**
the amount of the forward feed fraction (5) is reduced if the ash content of the accepted stock (9) is to be reduced.

4. A method according to Claim 1, 2 or 3,
**characterised in that**
the amount of flotation froth (8, 8', 8") withdrawn from the second flotation stage (2) is reduced if the fibre loss of the flotation plant is to be reduced.

5. A method according to Claim 1, 2, 3 or 4,
**characterised in that**
a fraction (8") of the flotation froth withdrawn from the second flotation stage (2) is returned into the feed to the same flotation stage (2).

6. A method according to Claim 5,
**characterised in that**
the fraction (8") is taken only from a portion of the flotation cells belonging to the second flotation stage (2).

7. A method according to Claim 6,
**characterised in that**
the downstream portion is selected as the portion of the flotation cells.

8. A method according to Claim 5, 6 or 7,
**characterised in that**
the amount of the fraction (8") is increased if the fibre or ash loss of the flotation plant is to be reduced.

9. A method according to one of the preceding claims,
**characterised in that**
the level in the flotation cells forming a flotation stage (1, 2) is set to regulate the amount of flotation froth (3, 8) removed.

10. A method according to one of Claims 1 to 8,
**characterised in that**
the foam level in the froth channel (19) of the flotation cells forming a flotation stage (1, 2) is set to regulate the amount of flotation froth (3, 8) removed.

11. A method according to Claim 9 or 10,
**characterised in that**
the level is adjusted by actuating a control valve (17) which influences the through feed (4, 7).

12. A method according to one of the preceding claims,
**characterised in that**
at least one regulating means (16) is used for the control operations.

13. A method according to one of the preceding claims,
**characterised in that**
the second flotation stage (2) is the last flotation stage for flotation of the flotation froth formed in a flotation stage preceding said second flotation stage.

14. A method according to one of the preceding claims,
**characterised in that**
the first flotation stage (1) is the primary stage of the flotation plant.

15. A method according to one of Claims 1 to 9,
**characterised in that**
the first flotation stage (1) already processes flotation froth from a preceding flotation stage.

## Revendications

1. Procédé destiné à l'élimination d'impuretés d'une suspension aqueuse de matières fibreuses de papier (S) à l'aide d'au moins deux étages de flottation (1, 2), qui sont couplés de telle sorte que la mousse de flottation (3) du premier étage de flottation (1) soit amenée à l'entrée du deuxième étage de flottation (2),
**caractérisé en ce que**
le débit (4) du deuxième étage de flottation (2) est réparti en une proportion aller (5) et en une proportion de recyclage (6), la proportion aller (5) étant amenée dans le débit (7) du premier étage de flottation (1), et la proportion de recyclage (6) dans l'entrée de celui-ci, et le rapport de cette répartition est réglé de telle sorte que les valeurs de qualité exigées soient atteintes pour la pâte à papier acceptée (9) de l'ensemble de l'installation.

2. Procédé selon la revendication 1,
**caractérisé en ce que**
la quantité de la proportion aller (5) est réduite lorsque le degré de blanc de la pâte acceptée (9) doit être augmenté.

3. Procédé selon la revendication 1 ou 2,
**caractérisé en ce que**
la quantité de la proportion aller (5) est réduite lorsque la teneur en cendres de la pâte acceptée (9) doit être réduite.

4. Procédé selon la revendication 1, 2 ou 3,
**caractérisé en ce que**
la quantité de mousse de flottation (8, 8', 8") soutirée du deuxième étage de flottation (2) est réduite lorsque la perte en fibres de l'installation de flottation doit être réduite.

5. Procédé selon la revendication 1, 2, 3 ou 4,
**caractérisé en ce que**
la proportion (8") de la mousse de flottation soutirée du deuxième étage de flottation (2) est recyclée dans l'entrée de ce même étage de flottation (2) .

6. Procédé selon la revendication 5,
**caractérisé en ce que**
la proportion (8") n'est prélevée que d'une partie des cellules de flottation faisant partie du deuxième étage de flottation (2).

7. Procédé selon la revendication 6,
**caractérisé en ce que**
la partie située en aval est choisie en tant que partie des cellules de flottation.

8. Procédé selon la revendication 5, 6 ou 7,
**caractérisé en ce que**
la quantité de la proportion (8") est augmentée lorsque la perte en fibres ou en cendres de l'installation de flottation doit être réduite.

9. Procédé selon l'une des revendications précédentes,
**caractérisé en ce que**
le niveau dans les cellules de flottation constituant un étage de flottation (1, 2) est réglé pour la régulation de la quantité de mousse de flottation (3, 8) évacuée.

10. Procédé selon l'une des revendications 1 à 8,
**caractérisé en ce que**
le niveau de mousse dans la goulotte de mousse (19) des cellules de flottation constituant un étage de flottation (1, 2) est réglé pour la régulation de la quantité de mousse de flottation (3, 8) évacuée.

11. Procédé selon la revendication 9 ou 10,
**caractérisé en ce que**
le réglage de niveau est effectué par la commande d'une vanne de régulation (17) qui influence le débit (4, 7) .

12. Procédé selon l'une des revendications précédentes,
**caractérisé en ce que**
au moins un régulateur (16) est utilisé pour les processus de commande.

13. Procédé selon l'une des revendications précédentes,
**caractérisé en ce que**
le deuxième étage de flottation (2) est le dernier étage pour la flottation de la mousse de flottation engendrée dans l'un des étages de flottation disposés en amont.

14. Procédé selon l'une des revendications précédentes,
**caractérisé en ce que**
le premier étage de flottation (1) est l'étage primaire de l'installation de flottation.

15. Procédé selon l'une des revendications 1 à 9,
**caractérisé en ce que**
le premier étage de flottation (1) traite déjà de la mousse de flottation d'un étage de flottation disposé en amont.
